# EUROPEAN PATENT APPLICATION

(11) **EP 4 518 411 A1**
(43) Date of publication of application: **05.03.2025**
(21) Application number: 22939029.9
(22) Date of filing: 27.04.2022
(51) Int. Cl.: H04W 24/10

(54) **MEASUREMENT REPORT SENDING METHOD AND APPARATUS, AND MEASUREMENT REPORT RECEIVING METHOD AND APPARATUS**

(71) Applicant: Beijing Xiaomi Mobile Software Co., Ltd., Beijing 100085 (CN)
(72) Inventor: LI, Mingju, Beijing 100085 (CN)
(74) Representative: Gunzelmann, Rainer
(86) International application number: PCT/CN2022/089675
(87) International publication number: WO 2023/206176

(57) **Abstract**

The present disclosure relates to the technical field of communications, and provides a measurement report sending method and apparatus, a measurement report receiving method and apparatus, a device, and a storage medium. The method comprises: receiving configuration information sent by a network side device; determining a measurement report according to the configuration information, wherein the measurement report comprises a reference signal identifier, a layer-1 reference signal received power (L1-RSRP) or a layer-1 signal-to-interference-plus-noise ratio (L1-SINR) and receiving beam information; and sending the measurement report to the network side device. The present disclosure provides a processing method for the situation that the measurement report does not comprise the receiving beam information, used for providing additional receiving beam information, and improving the beam prediction accuracy of an AI beam model.

## Description

### TECHNICAL FIELD

The disclosure relates to a field of communication technology, in particular to a method for sending a measurement report, a method for receiving a measurement report, an apparatus, a device and a storage medium.

### BACKGROUND

In a communication system, due to rapid fading of high-frequency channels, it is required to use beam-based transmission and reception in order to ensure coverage of new radio (NR).

During a process of beam management in related arts, a prediction method based on an artificial intelligence (AI) model may be used to determine beam quality. However, in the related arts, a report sent by the terminal device does not relate to receiving beam information, and there may be a situation that a beam prediction accuracy of an AI beam model is low. Therefore, a method of "sending a measurement report including receiving beam information" is urgently needed to provide additional receiving beam information and improve the beam prediction accuracy of the AI beam model.

### SUMMARY

The disclosure provides a method for sending a measurement report, a method for receiving a measurement report, an apparatus, a device and a storage medium, to provide additional receiving beam information and improve a beam prediction accuracy of an AI beam model.

According to an aspect of embodiments of the disclosure, a method for sending a measurement report is provided. The method is performed by a terminal device, and includes:
receiving configuration information sent by a network side device;
determining a measurement report according to the configuration information, in which the measurement report includes a reference signal identifier of a reference signal, a layer 1 - reference signal received power (L1-RSRP) or layer 1 - signal to interference plus noise ratio (L1-SINR), and receiving beam information; and
sending the measurement report to the network side device.

Optionally, in an embodiment of the disclosure, the method further includes:
acquiring the reference signal identifier according to the configuration information;
acquiring the L1-RSRP or the L1-SINR corresponding to the reference signal identifier, in which each receiving beam corresponds to the reference signal identifier;
acquiring the receiving beam information of each receiving beam.

Optionally, in an embodiment of the disclosure, acquiring the receiving beam information of each receiving beam includes at least one of:
acquiring a first absolute value of a first dimensional direction angle corresponding to each receiving beam;
acquiring a second absolute value of a second dimensional direction angle corresponding to each receiving beam, in which, the second dimensional direction angle is different from the first dimensional direction angle;
acquiring a first relative value of the first dimensional direction angle corresponding to each receiving beam;
acquiring a second relative value of the second dimensional direction angle corresponding to each receiving beam;
acquiring a first number of first dimensional direction angles corresponding to all receiving beams;
acquiring a second number of second dimensional direction angles corresponding to all receiving beams; or
acquiring a receiving beam identifier corresponding to each receiving beam.

Optionally, in an embodiment of the disclosure, acquiring the first relative value of the first dimensional direction angle corresponding to each receiving beam includes:
taking a first dimensional direction angle corresponding to a first receiving beam as a reference direction angle of a first dimension; and
acquiring a difference between an absolute value of a first dimensional direction angle corresponding to a second receiving beam and the reference direction angle of the first dimension, in which a first receiving beam identifier corresponding to the first receiving beam is different from a second receiving beam identifier corresponding to the second receiving beam;
determining the difference as a first relative value of the first dimensional direction angle corresponding to the first receiving beam.

Optionally, in an embodiment of the disclosure, acquiring the second relative value of the second dimensional direction angle corresponding to each receiving beam includes:
taking a second dimensional direction angle corresponding to a first receiving beam as a reference direction angle of a second dimension; and
acquiring a difference between an absolute value of a second dimensional direction angle corresponding to a second receiving beam and the reference direction angle of the second dimension, in which a first receiving beam identifier corresponding to the first receiving beam is different from a second receiving beam identifier corresponding to the second receiving beam;
determining the difference as a second relative value of the second dimensional direction angle corresponding to the first receiving beam.

Optionally, in an embodiment of the disclosure, the reference signal includes at least one of a synchronization signal block (SSB) or a channel state information-reference signal (CSI-RS).

According to another aspect of embodiments of the disclosure, a method for receiving a measurement report is provided. The method is performed by a network side device, and includes:
sending configuration information to a terminal device;
receiving a measurement report sent by the terminal device, in which, the measurement report includes a reference signal identifier of a reference signal, a layer 1 - reference signal received power (L1-RSRP) or layer 1 - signal to interference plus noise ratio (L1-SINR), and receiving beam information.

Optionally, in an embodiment of the disclosure, the receiving beam information includes at least one of:
a first absolute value of a first dimensional direction angle corresponding to each receiving beam of the terminal device;
a second absolute value of a second dimensional direction angle corresponding to each receiving beam, wherein the second dimensional direction angle is different from the first dimensional direction angle;
a first relative value of the first dimensional direction angle corresponding to each receiving beam;
a second relative value of the second dimensional direction angle corresponding to each receiving beam;
a first number of first dimensional direction angles corresponding to all receiving beams;
a second number of second dimensional direction angles corresponding to all receiving beams; or
a receiving beam identifier corresponding to each receiving beam.

Optionally, in an embodiment of the disclosure, the reference signal includes at least one of a synchronization signal block (SSB) or a channel state information-reference signal (CSI-RS).

According to yet another aspect of embodiments of the disclosure, an apparatus for sending a measurement report is provided. The apparatus includes:
a receiving module, configured to receive configuration information sent by a network side device;
a processing module, configured to determine a measurement report based on the configuration information, in which the measurement report includes a reference signal identifier, a layer 1 - reference signal received power (L1-RSRP) or layer 1 - signal to interference plus noise ratio (L1-SINR), and receiving beam information;
a sending module, configured to send the measurement report to the network side device.

According to yet another aspect of embodiments of the disclosure, an apparatus for receiving a measurement report is provided. The apparatus includes:
a sending module, configured to send configuration information to a terminal device;
a receiving module, configured to receive a measurement report sent by the terminal device, in which, the measurement report includes a reference signal identifier, a layer 1 - reference signal received power (L1-RSRP) or layer 1 - signal to interference plus noise ratio (L1-SINR), and receiving beam information.

According to yet another aspect of embodiments of the disclosure, a terminal device is provided. The terminal device includes a processor and a memory having a computer program stored thereon, in which the processor executes the computer program stored in the memory, causing the device to execute the method provided in an aspect of embodiments.

According to yet another aspect of embodiments of the disclosure, a network side device is provided. The network side device includes a processor and a memory having a computer program stored thereon, in which the processor executes the computer program stored in the memory, causing the device to execute the method provided in another aspect of embodiments.

According to yet another aspect of embodiments of the disclosure, a communication device is provided. The communication device includes a processor and an interface circuit, in which,
the interface circuit is configured to receive code instructions and transmit the code instructions to the processor;
the processor is configured to run the code instructions to perform the method provided in an aspect of embodiments.

According to yet another aspect of embodiments of the disclosure, a communication device is provided. The communication device includes a processor and an interface circuit, in which,
the interface circuit is configured to receive code instructions and transmit the code instructions to the processor;
the processor is configured to run the code instructions to perform the method provided in another aspect of embodiments.

According to yet another aspect of embodiments of the disclosure, a computer-readable storage medium for storing instructions is provided, in which, when the instructions are executed, the method provided in an aspect of embodiments is implemented.

According to yet another aspect of embodiments of the disclosure, a computer-readable storage medium for storing instructions is provided, in which, when the instructions are executed, the method provided in another aspect of embodiments is implemented.

To sum up, in embodiments of the disclosure, the terminal device may receive the configuration information sent by the network side device, determine the measurement report according to the configuration information, the measurement report includes the reference signal identifier of the reference signal, the layer 1 - reference signal received power (L1-RSRP) or layer 1 - signal to interference plus noise ratio (L1-SINR), and the receiving beam information, and send the measurement report to the network side device. In an embodiment of the disclosure, the terminal device sends the measurement report including the receiving beam information, to render the network side device to determine an AI beam model based on the measurement report, thus improving a beam prediction accuracy of the AI beam model. The disclosure provides a processing method for a situation that "a measurement report does not include receiving beam information", to provide additional receiving beam information and improve the beam prediction accuracy of the AI beam model.

### BRIEF DESCRIPTION OF THE DRAWINGS

The above-mentioned and/or additional aspects and advantages of the present disclosure will be apparent and readily understood from the following description of embodiments taken in conjunction with the accompanying drawings, in which:
FIG. 1 is a flowchart of a method for sending a measurement report provided by an embodiment of the disclosure.
FIG. 2 is a flowchart of a method for sending a measurement report provided by another embodiment of the disclosure.
FIG. 3 is a flowchart of a method for sending a measurement report provided by yet another embodiment of the disclosure.
FIG. 4 is a flowchart of a method for sending a measurement report provided by another embodiment of the disclosure.
FIG. 5 is a flowchart of a method for sending a measurement report provided by another embodiment of the disclosure.
FIG. 6 is a flowchart of a method for sending a measurement report provided by another embodiment of the disclosure.
FIG. 7 is a flowchart of a method for receiving a measurement report provided by another embodiment of the disclosure.
FIG. 8 is a flowchart of a method for receiving a measurement report provided by another embodiment of the disclosure.
FIG. 9 is a schematic structural diagram of an apparatus for sending a measurement report provided by an embodiment of the disclosure.
FIG. 10 is a schematic structural diagram of an apparatus for receiving a measurement report provided by another embodiment of the disclosure.
FIG. 11 is a block diagram of a terminal device provided by an embodiment of the disclosure.
FIG. 12 is a block diagram of a network side device provided by an embodiment of the disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with embodiments of the disclosure. Instead, they are merely examples of apparatuses and methods consistent with aspects related to the disclosure as recited in the appended claims.

The terms used in the disclosure are only for the purpose of describing specific embodiments, and are not intended to limit embodiments of the disclosure. The singular forms of "a" and "the" used in the disclosure and appended claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in embodiments of the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" or "in a case of" as used herein may be interpreted as "when", "upon" or "in response to determining".

A method for sending a measurement report, a method for receiving a measurement report, an apparatus, a device and a storage medium provided in an embodiment of the disclosure are described in detail below in combination with the accompanying drawings.

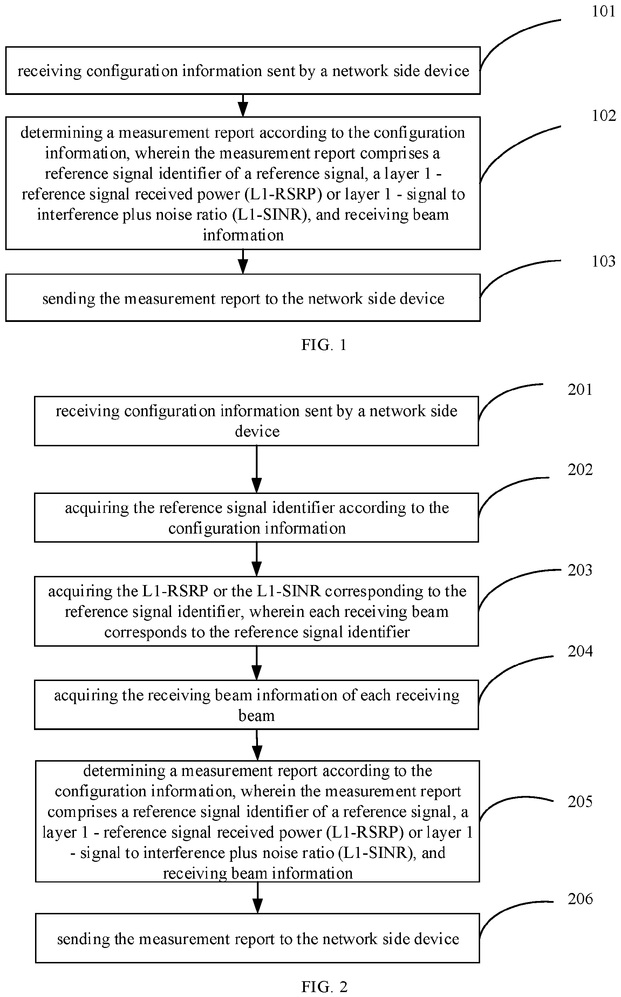

FIG. 1 is a flowchart of a method for sending a measurement report provided by an embodiment of the disclosure. The method is performed by a terminal device. As illustrated in FIG. 1, the method may include following steps.

At step 101, configuration information sent by a network side device is received.

It should be noted that, in an embodiment of the present disclosure, the terminal device may refer to a device that provides voice and/or data connectivity to a user. The terminal device may communicate with one or more core networks through a radio access network (RAN). The terminal device may be an Internet of Things terminal, such as a sensor device, a mobile phone (or called as "cellular" phone), or a computer with the Internet of Things terminal, which may be, for example, a fixed, portable, pocket, handheld, computer built-in, or vehicle mounted device, such as, a station (STA), a subscriber unit, a subscriber station, a mobile station, a mobile platform, a remote station, an access point, a remote terminal, an access terminal, a user terminal, or a user agent. Alternatively, the terminal device may also be a device of unmanned aerial vehicle. Alternatively, the terminal device may also be a vehicle mounted device, such as a vehicle computer with wireless communication function or an external wireless terminal connected to the vehicle computer. Alternatively, the terminal device may also be a roadside device, such as a street light, a signal light, or other roadside device with wireless communication function.

At step 102, a measurement report is determined according to the configuration information, in which the measurement report includes a reference signal identifier of a reference signal, a layer 1 - reference signal received power (L1-RSRP) or layer 1 - signal to interference plus noise ratio (L1-SINR), and receiving beam information.

In an embodiment of the disclosure, the method further includes:
acquiring the reference signal identifier according to the configuration information;
acquiring the L1-RSRP or the L1-SINR corresponding to the reference signal identifier, in which each receiving beam corresponds to the reference signal identifier;
acquiring the receiving beam information of each receiving beam.

In an embodiment of the disclosure, acquiring the receiving beam information of each receiving beam includes at least one of:
acquiring a first absolute value of a first dimensional direction angle corresponding to each receiving beam;
acquiring a second absolute value of a second dimensional direction angle corresponding to each receiving beam, in which, the second dimensional direction angle is different from the first dimensional direction angle;
acquiring a first relative value of the first dimensional direction angle corresponding to each receiving beam;
acquiring a second relative value of the second dimensional direction angle corresponding to each receiving beam;
acquiring a first number of first dimensional direction angles corresponding to all receiving beams;
acquiring a second number of second dimensional direction angles corresponding to all receiving beams; or
acquiring a receiving beam identifier corresponding to each receiving beam.

Further, acquiring the first relative value of the first dimensional direction angle corresponding to each receiving beam includes:
taking a first dimensional direction angle corresponding to a first receiving beam as a reference direction angle of a first dimension; and
acquiring a difference between an absolute value of a first dimensional direction angle corresponding to a second receiving beam and the reference direction angle of the first dimension, in which a first receiving beam identifier corresponding to the first receiving beam is different from a second receiving beam identifier corresponding to the second receiving beam;
determining the difference as a first relative value of the first dimensional direction angle corresponding to the first receiving beam.

Exemplarily, acquiring the second relative value of the second dimensional direction angle corresponding to each receiving beam includes:
taking a second dimensional direction angle corresponding to a first receiving beam as a reference direction angle of a second dimension; and
acquiring a difference between an absolute value of a second dimensional direction angle corresponding to a second receiving beam and the reference direction angle of the second dimension, in which a first receiving beam identifier corresponding to the first receiving beam is different from a second receiving beam identifier corresponding to the second receiving beam;
determining the difference as a second relative value of the second dimensional direction angle corresponding to the first receiving beam.

Further, the reference signal includes at least one of a synchronization signal block (SSB) or a channel state information-reference signal (CSI-RS).

At step 103, the measurement report is sent to the network side device.

To sum up, in embodiments of the disclosure, the terminal device may receive the configuration information sent by the network side device, determine the measurement report according to the configuration information, the measurement report includes the reference signal identifier of the reference signal, the layer 1 - reference signal received power (L1-RSRP) or layer 1 - signal to interference plus noise ratio (L1-SINR), and the receiving beam information, and send the measurement report to the network side device. In an embodiment of the disclosure, the terminal device sends the measurement report including the receiving beam information, to render the network side device to determine an AI beam model based on the measurement report, thus improving a beam prediction accuracy of the AI beam model. The disclosure provides a processing method for a situation that "a measurement report does not include receiving beam information", to provide additional receiving beam information and improve the beam prediction accuracy of the AI beam model.

It should be noted that, the method for sending the measurement report provided by the following embodiment may be specifically applied in a network NR, especially when a communication frequency band is frequency range 2.

FIG. 2 is a flowchart of a method for sending a measurement report provided by another embodiment of the disclosure. The method is performed by a terminal device. As illustrated in FIG. 2, the method may include following steps.

At step 201, configuration information sent by a network side device is received.

At step 202, a reference signal identifier is acquired according to the configuration information.

At step 203, the L1-RSRP or the L1-SINR corresponding to the reference signal identifier is acquired, in which each receiving beam corresponds to the reference signal identifier

At step 204, the receiving beam information of each receiving beam is acquired.

At step 205, a measurement report is determined according to the configuration information, in which the measurement report includes a reference signal identifier of a reference signal, a layer 1 - reference signal received power (L1-RSRP) or layer 1 - signal to interference plus noise ratio (L1-SINR), and receiving beam information.

At step 206, the measurement report is sent to the network side device.

In an embodiment of the present disclosure, when the terminal device acquires the reference signal identifier, the L1-RSRP or L1-SINR corresponding to the reference signal identifier which corresponds to each receiving beam, and the receiving beam information of each receiving beam, the terminal device may determine the measurement report.

In an embodiment of the present disclosure, the terminal device acquiring the receiving beam information of each receiving beam includes at least one of:
acquiring a first absolute value of a first dimensional direction angle corresponding to each receiving beam;
acquiring a second absolute value of a second dimensional direction angle corresponding to each receiving beam, in which, the second dimensional direction angle is different from the first dimensional direction angle;
acquiring a first relative value of the first dimensional direction angle corresponding to each receiving beam;
acquiring a second relative value of the second dimensional direction angle corresponding to each receiving beam;
acquiring a first number of first dimensional direction angles corresponding to all receiving beams;
acquiring a second number of second dimensional direction angles corresponding to all receiving beams; or
acquiring a receiving beam identifier corresponding to each receiving beam.

Further, the first absolute value indicates an absolute value of the first dimensional direction angle corresponding to each receiving beam. The term "first" in the first absolute values is only used to distinguish it from the second absolute value. The first absolute value does not specifically refer to a certain fixed value.

For example, the second absolute value indicates an absolute value of the second dimensional direction angle corresponding to each receiving beam. The second absolute value does not specifically refer to a certain fixed value.

In an embodiment of the present disclosure, the first dimensional direction angle indicates any one direction angle in a plurality of dimensional direction angles. The term "first" in the first dimensional direction angle is only used to distinguish it from the second dimensional direction angle. The first dimensional direction angle does not specifically refer to a certain fixed direction angle.

Furthermore, the second dimensional direction angle indicates any one dimensional direction in the plurality of dimensional direction angles that is different from the first dimensional direction angle. The second dimensional direction angle does not specifically refer to a certain fixed direction angle. For example, the first dimensional direction angle may be a zenith angle, and the second dimensional direction angle may be an azimuth angle. The first absolute value of the first dimensional direction angle ranges from 0 to 2*pi. The second absolute value of the second dimensional direction angle ranges from 0 to 2*pi.

For example, the first number refers to the number of first dimensional direction angles corresponding to all receiving beams. The first number does not specifically refer to a certain fixed value. The second number refers to the number of second dimensional direction angles corresponding to all receiving beams. The second number does not specifically refer to a certain fixed value. For example, when the first dimensional direction angles change, the first number may also change accordingly.

In an embodiment of the present disclosure, the receiving beam identifier ID is used to uniquely identify one receiving beam. That is, different receiving beams correspond to different receiving beam identities.

Further, the reference signal includes at least one of a synchronization signal block (SSB) or a channel state information-reference signal (CSI-RS). That is, the reference signal may include the SSB only, or may include the CSI-RS only, or may include both the SSB and the CSI-RS.

For example, the first number may specifically be a total number of first dimensional direction angles corresponding to all receiving beams, and the first number may be, for example, M, where M is a positive integer. For example, some receiving beams correspond to the same first dimensional direction angle, and some receiving beams correspond to different first dimensional direction angles. The first number refers to a total number of different first dimensional direction angles in the first dimensional direction angles corresponding to all receiving beams. Specifically, the second number may be a total number of second dimensional direction angles corresponding to all receiving beams, and the second number may be, for example, N, where N is a positive integer. For example, some receiving beams correspond to the same second dimensional direction angle, and some receiving beams correspond to different second dimensional direction angles. The second number refers to a total number of different second dimensional direction angles in the second dimensional direction angles corresponding to all receiving beams. The first number does not specifically refer to a certain fixed number. For example, when the first dimensional direction angles change, the first number may also change accordingly. The second number does not specifically refer to a certain fixed number. For example, when the second dimensional direction angles change, the second number may also change accordingly.

To sum up, in embodiments of the disclosure, the terminal may receive the configuration information sent by the network side device, determine the measurement report according to the configuration information, the mea surement report includes the reference signal identifier of the reference signal, the layer 1 - reference signal received power (L1-RSRP) or layer 1 - signal to interference plus noise ratio (L1-SINR), and the receiving beam information, and send the measurement report to the network side device. In an embodiment of the disclosure, the terminal device may acquire the reference signal identifier, the L1-RSRP or L1-SINR corresponding to the reference signal identifier which corresponds to each receiving beam, and the receiving beam information of each receiving beam, and determine the measurement report, and send the measurement report including the receiving beam information, to render the network side device to determine an AI beam model based on the measurement report, thus improving a beam prediction accuracy of the AI beam model. The disclosure provides a processing method for a situation that "a measurement report does not include receiving beam information", to provide additional receiving beam information and improve the beam prediction accuracy of the AI beam model.

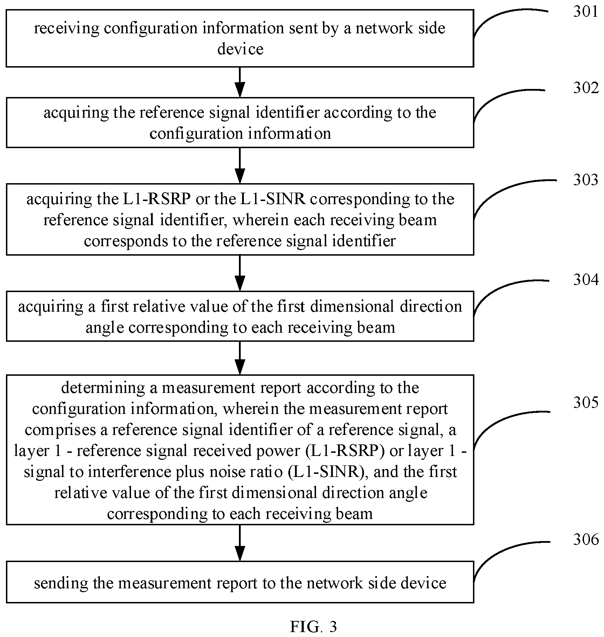

FIG. 3 is a flowchart of a method for sending a measurement report provided by another embodiment of the disclosure. The method is performed by a terminal device. As illustrated in FIG. 3, the method may include following steps.

At step 301, configuration information sent by a network side device is received.

At step 302, a reference signal identifier is acquired according to the configuration information.

At step 303, the L1-RSRP or the L1-SINR corresponding to the reference signal identifier is acquired, in which each receiving beam corresponds to the reference signal identifier.

At step 304, a first relative value of the first dimensional direction angle corresponding to each receiving beam is acquired.

At step 305, a measurement report is determined according to the configuration information, in which the measurement report includes a reference signal identifier of a reference signal, a layer 1 - reference signal received power (L1-RSRP) or layer 1 - signal to interference plus noise ratio (L1-SINR), and the first relative value of the first dimensional direction angle corresponding to each receiving beam.

At step 306, the measurement report is sent to the network side device.

In an embodiment of the present disclosure, the first relative value indicates a relative value of the first dimensional direction angle corresponding to each receiving beam. The term "first" in the first relative value is only used to distinguish it with the second relative value. The first relative value does not specifically refer to a certain fixed value.

In an embodiment of the present disclosure, the terminal device acquiring the first relative value of the first dimensional direction angle corresponding to each receiving beam, specifically, includes: taking a first dimensional direction angle corresponding to a first receiving beam as a reference direction angle of a first dimension; and
acquiring a difference between an absolute value of a first dimensional direction angle corresponding to a second receiving beam and the reference direction angle of the first dimension, in which a first receiving beam identifier corresponding to the first receiving beam is different from a second receiving beam identifier corresponding to the second receiving beam;
determining the difference as a first relative value of the first dimensional direction angle corresponding to the first receiving beam.

Further, the first receiving beam is any one of respective receiving beams of the terminal device. The second receiving beam is any receiving beam of respective receiving beam of the terminal device except the first receiving beam. Since the receiving beam identifier is used to uniquely identify the receiving beam, the first receiving beam identifier corresponding to the first receiving beam is different from the second receiving beam identifier corre sponding to the second receiving beam.

For example, the first receiving beam identifier does not specifically refer to a certain fixed identifier. For example, when the first receiving beam changes, the first receiving beam identifier may also change accordingly.

To sum up, in embodiments of the disclosure, the terminal may receive the configuration information sent by the network side device, determine the measurement report according to the configuration information, the measurement report includes the reference signal identifier of the reference signal, the layer 1 - reference signal received power (L1-RSRP) or layer 1 - signal to interference plus noise ratio (L1-SINR), and the receiving beam information, and send the measurement report to the network side device. In an embodiment of the disclosure, the terminal device may acquire the reference signal identifier, the L1-RSRP or L1-SINR corresponding to the reference signal identifier which corresponds to each receiving beam, and the first relative value of the first dimensional direction angle corresponding to each of respective receiving beams, and determine the measurement report, and send the measurement report including the first relative value of the first dimensional direction angle corresponding to each receiving beam, to render the network side device to determine an AI beam model based on the measurement report, thus improving a beam prediction accuracy of the AI beam model. In an embodiment of the present disclosure, it is specifically described that the receiving beam information is the first relative value of the first dimensional direction angle corresponding to each receiving beam. The disclosure provides a processing method for a situation that "a measurement report does not include receiving beam information", to provide additional receiving beam information and improve the beam prediction accuracy of the AI beam model.

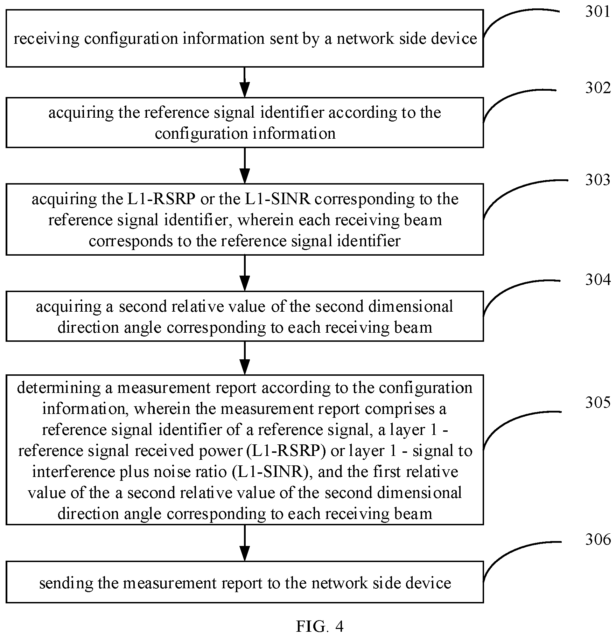

FIG. 4 is a flowchart of a method for sending a measurement report provided by another embodiment of the disclosure. The method is performed by a terminal device. As illustrated in FIG. 4, the method may include following steps.

At step 401, configuration information sent by a network side device is received.

At step 402, a reference signal identifier is acquired according to the configuration information.

At step 403, the L1-RSRP or the L1-SINR corresponding to the reference signal identifier is acquired, in which each receiving beam corresponds to the reference signal identifier

At step 404, a second relative value of the second dimensional direction angle corresponding to each receiving beam is acquired.

At step 405, a measurement report is determined according to the configuration information, in which the measurement report includes a reference signal identifier of a reference signal, a layer 1 - reference signal received power (L1-RSRP) or layer 1 - signal to interference plus noise ratio (L1-SINR), and the second relative value of the second dimensional direction angle corresponding to each receiving beam.

At step 406, the measurement report is sent to the network side device.

In an embodiment of the present disclosure, the second relative value indicates a relative value of the second dimensional direction angle corresponding to each receiving beam. The second relative value does not specifically refer to a certain fixed value.

In an embodiment of the present disclosure, the terminal device acquiring the second relative value of the second dimensional direction angle corresponding to each receiving beam, specifically, includes: taking a second dimensional direction angle corresponding to a first receiving beam as a reference direction angle of a second dimension; and
acquiring a difference between an absolute value of a second dimensional direction angle corresponding to a second receiving beam and the reference direction angle of the second dimension, in which a first receiving beam identifier corresponding to the first receiving beam is different from a second receiving beam identifier corresponding to the second receiving beam;
determining the difference as a second relative value of the second dimensional direction angle corresponding to the first receiving beam.

To sum up, in embodiments of the disclosure, the terminal may receive the configuration information sent by the network side device, determine the measurement report according to the configuration information, the measurement report includes the reference signal identifier of the reference signal, the layer 1 - reference signal received power (L1-RSRP) or layer 1 - signal to interference plus noise ratio (L1-SINR), and the receiving beam information, and send the measurement report to the network side device. In an embodiment of the disclosure, the terminal device may acquire the reference signal identifier, the L1-RSRP or L1-SINR corresponding to the reference signal identifier which corresponds to each receiving beam, and the second relative value of the second dimensional direction angle corresponding to each of respective receiving beams, and determine the measurement report, and send the measurement report including the second relative value of the second dimensional direction angle corresponding to each receiving beam, to render the network side device to determine an AI beam model based on the measurement report, thus improving a beam prediction accuracy of the AI beam model. In an embodiment of the present disclosure, it is specifically described that the receiving beam information is the second relative value of the second dimensional direction angle corresponding to each receiving beam. The disclosure provides a processing method for a situation that "a measurement report does not include receiving beam information", to provide additional receiving beam information and improve the beam prediction accuracy of the AI beam model.

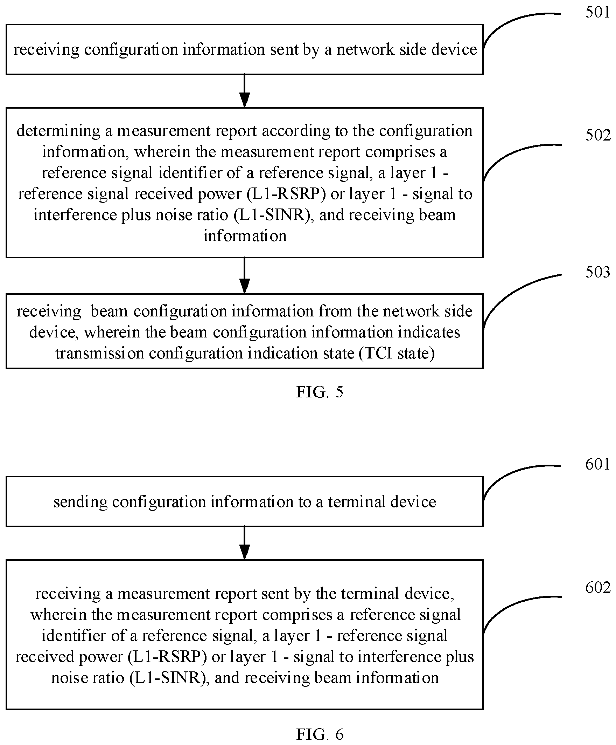

FIG. 5 is a flowchart of a method for sending a measurement report provided by another embodiment of the disclosure. The method is performed by a terminal device. As illustrated in FIG. 5, the method may include following steps.

At step 501, configuration information sent by a network side device is received.

At step 502, a measurement report is determined according to the configuration information, in which the measurement report includes a reference signal identifier of a reference signal, a layer 1 - reference signal received power (L1-RSRP) or layer 1 - signal to interference plus noise ratio (L1-SINR), and receiving beam information.

At step 503, beam configuration information is received from the network side device. The beam configuration information indicates transmission configuration indication state (TCI state).

In an embodiment of the present disclosure, the TCI state includes at least one quasi co-located type QCL Type.

In an embodiment of the present disclosure, QCL includes QCL Type A, QCL Type B, QCL Type C and QCL Type D. QCL Type D indicates reception parameter information, and QCL Type A includes at least one of a Doppler frequency shift parameter, a Doppler extension parameter, an average delay parameter or a delay extension related parameter. QCL Type B includes at least one of a Doppler frequency shift parameter, a Doppler extension parameter, an average delay parameter or a delay extension related parameter. QCL Type C includes at least one of a Doppler frequency shift parameter, a Doppler extension parameter, an average delay parameter and a delay extension related parameter.

To sum up, in embodiments of the disclosure, the terminal may receive the configuration information sent by the network side device, determine the measurement report according to the configuration information, the measurement report includes the reference signal identifier of the reference signal, the layer 1 - reference signal received power (L1-RSRP) or layer 1 - signal to interference plus noise ratio (L1-SINR), and the receiving beam information, and send the measurement report to the network side device. The network device may train an AI model based on the measurement report to improve a beam prediction accuracy of the AI beam model. In an embodiment of the present disclosure, the terminal device may also receive the beam configuration information of the network side device, and the beam configuration information indicates the TCI state. The disclosure provides a processing method for a situation that "a measurement report does not include receiving beam information", to provide additional receiving beam information and improve the beam prediction accuracy of the AI beam model.

FIG. 6 is a flowchart of a method for receiving a measurement report provided by an embodiment of the disclosure. The method is performed by a terminal device. As illustrated in FIG. 6, the method may include following steps.

At step 601, configuration information is sent to a terminal device.

At step 602, a measurement report sent by the terminal device is received, in which, the measurement report includes a reference signal identifier of a reference signal, a layer 1 - reference signal received power (L1-RSRP) or layer 1 - signal to interference plus noise ratio (L1-SINR), and receiving beam information.

In an embodiment of the disclosure, the receiving beam information includes at least one of:
a first absolute value of a first dimensional direction angle corresponding to each receiving beam of the terminal device;
a second absolute value of a second dimensional direction angle corresponding to each receiving beam, wherein the second dimensional direction angle is different from the first dimensional direction angle;
a first relative value of the first dimensional direction angle corresponding to each receiving beam;
a second relative value of the second dimensional direction angle corresponding to each receiving beam;
a first number of first dimensional direction angles corresponding to all receiving beams;
a second number of second dimensional direction angles corresponding to all receiving beams; or
a receiving beam identifier corresponding to each receiving beam.

In an embodiment of the disclosure, the reference signal includes at least one of a synchronization signal block (SSB) or a channel state information-reference signal (CSI-RS).

For example, the first number may specifically be a total number of first dimensional direction angles corresponding to all receiving beams, and the first number may be, for example, M, where M is a positive integer. For example, some receiving beams correspond to the same first dimensional direction angle, and some receiving beams correspond to different first dimensional direction angles. The first number refers to a total number of different first dimensional direction angles in the first dimensional direction angles corresponding to all receiving beams. Specifically, the second number may be a total number of second dimensional direction angles corresponding to all receiving beams, and the second number may be, for example, N, where N is a positive integer. For example, some receiving beams correspond to the same second dimensional direction angle, and some receiving beams correspond to different second dimensional direction angles. The second number refers to a total number of different second dimensional direction angles in the second dimensional direction angles corresponding to all receiving beams. The first number does not specifically refer to a certain fixed number. For example, when the first dimensional direction angles change, the first number may also change accordingly. The second number does not specifically refer to a certain fixed number. For example, when the second dimensional direction angles change, the second number may also change accordingly.

In an embodiment of the present disclosure, when the network side device acquires the measurement report, the network side device may acquire an association between direction information or directions of the receiving beams corresponding to different receiving beam IDs, and input the association between direction information or directions into an AI model to improve a beam prediction accuracy of the AI beam model. When the network side device inputs the association between the direction information or the directions into the AI model, the network side device may explicitly or implicitly input the association between the direction information or the directions into the AI model.

Further, when the network side device acquires the first number of first dimensional direction angles corresponding to all receiving beams, the second number of second dimensional direction angles corresponding to all receiving beams, and a receiving beam identification ID corresponding to each receiving beam, the network side device may acquire a relationship between the first dimensional direction angle and the second dimensional direction angle corresponding to each receiving beam ID. For example, the network side device may divide a plurality of receiving beam IDs into N groups, each group includes M receiving beam IDs. The receiving beams corresponding to the receiving beam IDs in each group have the same second dimensional direction angle, and different first dimensional direction angles corresponding to the plurality of receiving beams, then values of the IDs are from small to large, and the corresponding first dimensional direction angles are also from small to large, which, for the second dimensional direction angles corresponding to the N groups, the receiving beam IDs are from small to large, The second dimensional direction angles are from small to large.

To sum up, in embodiments of the disclosure, the network side device may send the configuration information to the terminal device, and receive the measurement report sent by the terminal device, in which, the measurement report includes the reference signal identifier of the reference signal, the layer 1 - reference signal received power (L1-RSRP) or layer 1 - signal to interference plus noise ratio (L1-SINR), and the receiving beam information. In an embodiment of the disclosure, the terminal device sends the measurement report including the receiving beam information, to render the network side device to determine an AI beam model based on the measurement report, thus improving a beam prediction accuracy of the AI beam model. The disclosure provides a processing method for a situation that "a measurement report does not include receiving beam information", to provide additional receiving beam information and improve the beam prediction accuracy of the AI beam model.

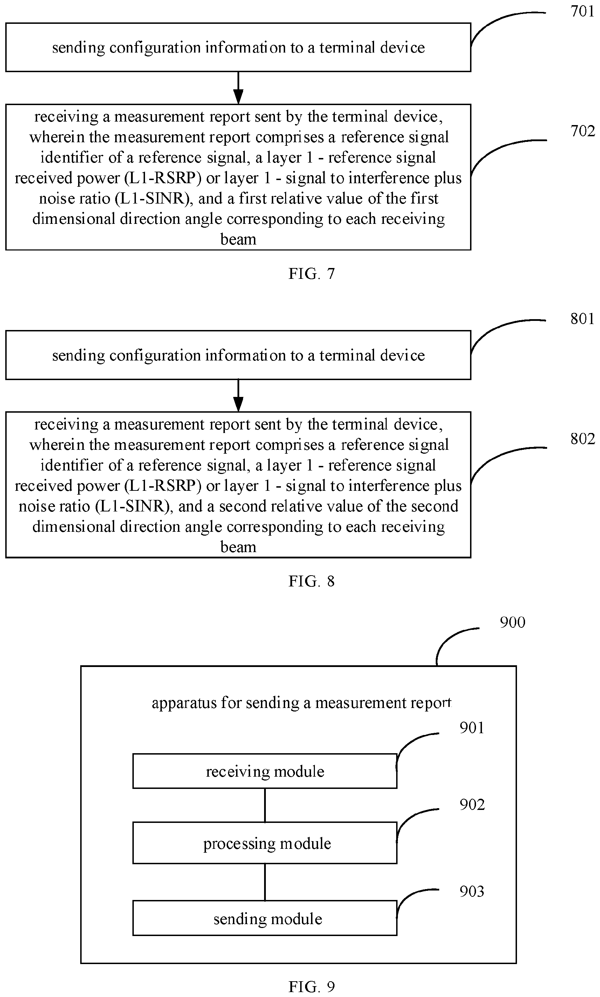

FIG. 7 is a flowchart of a method for receiving a measurement report provided by an embodiment of the disclosure. The method is performed by a terminal device. As illustrated in FIG. 7, the method may include following steps.

At step 701, configuration information is sent to a terminal device.

At step 702, a measurement report sent by the terminal device is received, in which, the measurement report includes a reference signal identifier of a reference signal, a layer 1 - reference signal received power (L1-RSRP) or layer 1 - signal to interference plus noise ratio (L1-SINR), and a first relative value of the first dimensional direction angle corresponding to each receiving beam.

In an embodiment of the disclosure, the terminal device may take a first dimensional direction angle corresponding to a first receiving beam as a reference dir ection angle of a first dimension, and acquire a difference between an absolute value of a first dimensional direction angle corresponding to a second receiving beam and the reference direction angle of the first dimension, in which a first receiving beam identifier corresponding to the first receiving beam is different from a second receiving beam identifier corresponding to the second receiving beam, and determine the difference as a first relative value of the first dimensional direction angle corresponding to the first receiving beam. Based on this, the terminal device may acquire the first relative value of the first dimensional direction angle corresponding to each receiving beam.

To sum up, in embodiments of the disclosure, the network side device may send the configuration information to the terminal device, and receive the measurement report sent by the terminal device, in which, the measurement report includes the reference signal identifier of the reference signal, the layer 1 - reference signal received power (L1-RSRP) or layer 1 - signal to interference plus noise ratio (L1-SINR), and the receiving beam information. In an embodiment of the disclosure, the terminal device sends the measurement report including the first relative value of the first dimensional direction angle corresponding to each receiving beam, and the network side device may determine an AI beam model based on the first relative value of the first dimensional direction angle corresponding to each receiving beam in the measurement report, thus improving a beam prediction accuracy of the AI beam model. The disclosure provides a processing method for a situation that "a measurement report does not include receiving beam information", to provide additional receiving beam information and improve the beam prediction accuracy of the AI beam model.

FIG. 8 is a flowchart of a method for receiving a measurement report provided by an embodiment of the disclosure. The method is performed by a terminal device. As illustrated in FIG. 8, the method may include following steps.

At step 801, configuration information is sent to a terminal device.

At step 802, a measurement report sent by the terminal device is received, in which, the measurement report includes a reference signal identifier of a reference signal, a layer 1 - reference signal received power (L1-RSRP) or layer 1 - signal to interference plus noise ratio (L1-SINR), and a second relative value of the second dimensional direction angle corresponding to each receiving beam.

In an embodiment of the disclosure, the terminal device may take a second dimensional direction angle corresponding to a first receiving beam as a reference direction angle of a second dimension; and acquire a difference between an absolute value of a second dimensional direction angle corresponding to a second receiving beam and the reference direction angle of the second dimension, in which a first receiving beam identifier corresponding to the first receiving beam is different from a second receiving beam identifier corresponding to the second receiving beam; determine the difference as a second relative value of the second dimensional direction angle corresponding to the first receiving beam. Based on this, the terminal device may acquire the second relative value of the second dimensional direction angle corresponding to each receiving beam.

To sum up, in embodiments of the disclosure, the network side device may send the configuration information to the terminal device, and receive the measurement report sent by the terminal device, in which, the measurement report includes the reference signal identifier of the reference signal, the layer 1 - reference signal received power (L1-RSRP) or layer 1 - signal to interference plus noise ratio (L1-SINR), and the receiving beam information. In an embodiment of the disclosure, the terminal device sends the measurement report including the second relative value of the second dimensional direction angle corresponding to each receiving beam, and the network side device may determine an AI beam model based on the second relative value of the second dimensional direction angle corresponding to each receiving beam in the measurement report, thus improving a beam prediction accuracy of the AI beam model. The disclosure provides a processing method for a situation that "a measurement report does not include receiving beam information", to provide additional receiving beam information and improve the beam prediction accuracy of the AI beam model.

FIG. 9 is a schematic structural diagram of an apparatus for sending a measurement report provided by an embodiment of the disclosure. As illustrated in FIG. 9, the apparatus 900 for sending a measurement report may include:
a receiving module 901, configured to receive configuration information sent by a network side device;
a processing module 902, configured to determine a measurement report based on the configuration information, in which the measurement report includes a reference signal identifier, a layer 1 - reference signal received power (L1-RSRP) or layer 1 - signal to interference plus noise ratio (L1-SINR), and receiving beam information;
a sending module 903, configured to send the measurement report to the network side device.

To sum up, in embodiments of the disclosure, the apparatus for sending a measurement report may receive the configuration information sent by the network side device, determine the measurement report according to the configuration information, the measurement report includes the reference signal identifier of the reference signal, the layer 1 - reference signal received power (L1-RSRP) or layer 1 - signal to interference plus noise ratio (L1-SINR), and the receiving beam information, and send the measurement report to the network side device. In an embodiment of the disclosure, the apparatus for sending a measurement report sends the measurement report including the receiving beam information, to render the network side device to determine an AI beam model based on the measurement report, thus improving a beam prediction accuracy of the AI beam model. The disclosure provides a processing method for a situation that "a measurement report does not include receiving beam information", to provide additional receiving beam information and improve the beam prediction accuracy of the AI beam model.

Optionally, in an embodiment of the disclosure, the processing module 902 is further configured to:
acquire the reference signal identifier according to the configuration information;
acquire the L1-RSRP or the L1-SINR corresponding to the reference signal identifier, in which each receiving beam corresponds to the reference signal identifier;
acquire the receiving beam information of each receiving beam.

Optionally, in an embodiment of the disclosure, the processing module 902 is further configured to acquire the receiving beam information of each receiving beam including at least one of:
acquiring a first absolute value of a first dimensional direction angle corresponding to each receiving beam;
acquiring a second absolute value of a second dimensional direction angle corresponding to each receiving beam, in which, the second dimensional direction angle is different from the first dimensional direction angle;
acquiring a first relative value of the first dimensional direction angle corresponding to each receiving beam;
acquiring a second relative value of the second dimensional direction angle corresponding to each receiving beam;
acquiring a first number of first dimensional direction angles corresponding to all receiving beams;
acquiring a second number of second dimensional direction angles corresponding to all receiving beams; or
acquiring a receiving beam identifier corresponding to each receiving beam.

Optionally, in an embodiment of the disclosure, the processing module 902 is further configured to acquire the first relative value of the first dimensional direction angle corresponding to each receiving beam including:
taking a first dimensional direction angle corresponding to a first receiving beam as a reference direction angle of a first dimension; and
acquiring a difference between an absolute value of a first dimensional direction angle corresponding to a second receiving beam and the reference direction angle of the first dimension, in which a first receiving beam identifier corresponding to the first receiving beam is different from a second receiving beam identifier corresponding to the second receiving beam;
determining the difference as a first relative value of the first dimensional direction angle corresponding to the first receiving beam.

Optionally, in an embodiment of the disclosure, the processing module 902, when acquiring the second relative value of the second dimensional direction angle corresponding to each receiving beam, is specifically configured to:
take a second dimensional direction angle corresponding to a first receiving beam as a reference direction angle of a second dimension; and
acquire a difference between an absolute value of a second dimensional direction angle corresponding to a second receiving beam and the reference direction angle of the second dimension, in which a first receiving beam identifier corresponding to the first receiving beam is different from a second receiving beam identifier corresponding to the second receiving beam;
determine the difference as a second relative value of the second dimensional direction angle corresponding to the first receiving beam.

Optionally, in an embodiment of the disclosure, the reference signal includes at least one of a synchronization signal block (SSB) or a channel state information-reference signal (CSI-RS).

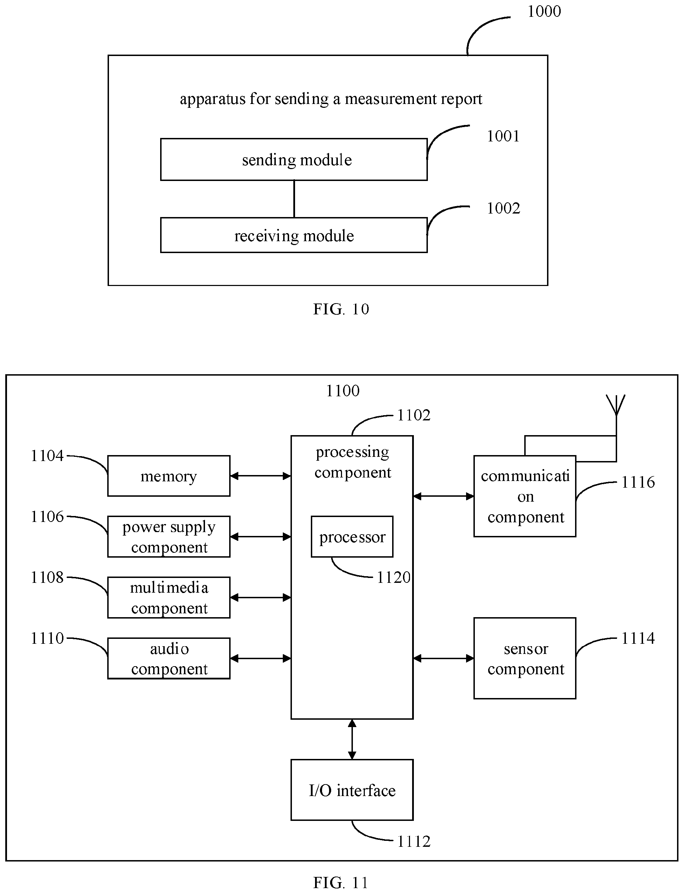

FIG. 10 is a schematic structural diagram of an apparatus for receiving a measurement report provided by an embodiment of the disclosure. As illustrated in FIG. 10, the apparatus 1000 for sending a measurement report may include:
a sending module 1001, configured to send configuration information to a terminal device;
a receiving module 1002, configured to receive a measurement report sent by the terminal device, in which, the measurement report includes a reference signal identifier, a layer 1 - reference signal received power (L1-RSRP) or layer 1 - signal to interference plus noise ratio (L1-SINR), and receiving beam information.

To sum up, in embodiments of the disclosure, the network side device may send the configuration information to the terminal device, and receive the measurement report sent by the terminal device, in which, the measurement report includes the reference signal identifier of the reference signal, the layer 1 - reference signal received power (L1-RSRP) or layer 1 - signal to interference plus noise ratio (L1-SINR), and the receiving beam information. In an embodiment of the disclosure, the terminal device sends the measurement report including the receiving beam information, to render the network side device to determine an AI beam model based on the measurement report, thus improving a beam prediction accuracy of the AI beam model. The disclosure provides a processing method for a situation that "a measurement report does not include receiving beam information", to provide additional receiving beam information and improve the beam prediction accuracy of the AI beam model.

Optionally, in an embodiment of the disclosure, the receiving beam information includes at least one of:
a first absolute value of a first dimensional direction angle corresponding to each receiving beam of the terminal device;
a second absolute value of a second dimensional direction angle corresponding to each receiving beam, wherein the second dimensional direction angle is different from the first dimensional direction angle;
a first relative value of the first dimensional direction angle corresponding to each receiving beam;
a second relative value of the second dimensional direction angle corresponding to each receiving beam;
a first number of first dimensional direction angles corresponding to all receiving beams;
a second number of second dimensional direction angles corresponding to all receiving beams; or
a receiving beam identifier corresponding to each receiving beam.

Optionally, in an embodiment of the disclosure, the reference signal includes at least one of a synchronization signal block (SSB) or a channel state information-reference signal (CSI-RS).

FIG. 11 is a block diagram illustrating a terminal device (UE) 1100 according to an embodiment of the present disclosure. For example, the UE 1100 may be a mobile phone, a computer, a digital broadcasting terminal equipment, a messaging device, a game console, a tablet device, a medical equipment, a fitness equipment, a personal digital assistant, etc.

As illustrated in FIG. 11, the UE 1100 may include at least one component: a processing component 1102, a memory 1104, a power supply component 1106, a multimedia component 1108, an audio component 1110, an input/output (I/O) of interface 1112, a sensor component 1114, and a communication component 1116.

The processing component 1102 generally controls the whole operation of the UE 1100, such as operations related to display, phone call, data communication, camera operation and recording operation. The processing component 1102 may include one or more processors 1120 to perform instructions, to complete all or part of steps of the above method. In addition, the processing component 1102 may include at least one module for the convenience of interaction between the processing component 1102 and other components. For example, the processing component 1102 may include a multimedia module for the convenience of interaction between the multimedia component 1108 and the processing component 1102.

The memory 1104 is configured to store all types of data to support an operation of the UE 1100. Examples of the data include the instructions of any applications or methods operated on the UE 1100, contact data, phone book data, messages, pictures, videos, etc. The memory 1104 may be implemented by any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 1106 may provide power supply for all components of the UE 1100. The power supply component 1106 may include a power supply management system, at least one power supply, and other components related to generating, managing and distributing power for the UE 1100.

The multimedia component 1108 includes a screen of an output interface provided between the UE 1100 and the user. In some embodiments, a screen may include a liquid crystal display (LCD) and a touch panel (TP). When the screen includes a touch panel, the screen may be implemented as a touch screen to receive input signals from the user. The touch panel includes at least one touch sensor to sense touching, sliding and gestures on the touch panel. The touch sensor may not only sense the boundary of touch or slide action, but also detect wakeup time and pressure related to the touching or sliding operation. In some embodiments, the multimedia component 1108 includes a front camera and/or a rear camera. When the UE 1100 is in operation mode, such as a shooting mode or a video mode, the front camera or the rear camera may receive external multimedia data. Each front camera and rear camera may be a fixed optical lens system or an optical lens system with a focal length and an optical zoom capacity.

The audio component 1110 is configured as an output and/or input signal. For example, the audio component 1110 includes a microphone (MIC). When the UE1100 is in operation mode, such as call mode, record mode, and speech recognition mode, a microphone is configured to receive external audio signals. The audio signals received may be further stored in the memory 1104 or sent via the communication component 1116. In some embodiments, the audio component 1110 further includes a speaker configured to output an audio signal.

The I/O interface 1112 provides an interface for the processing component 1102 and the peripheral interface module, and the peripheral interface module may be a keyboard, a click wheel, a button, etc. The buttons may include but not limited to a home button, a volume button, a start button and a lock button.

The sensor component 1114 includes at least one sensor configured to provide status assessments in all aspects for the UE 1100. For example, the sensor component 1114 may detect an on/off state of the UE 1100 and relative positioning of the component. For example, the component is a display and a keypad of the UE 1100. The sensor component 1114 may further detect a location change of the UE 1100 or one component of the UE 1100, presence or absence of contact between the user and the UE 1100, an orientation or acceleration/deceleration of the UE 1100, and a temperature change of the UE 1100. The sensor component 1114 may include a proximity sensor, which is configured to detect the existence of the objects nearby without any physical contact. The sensor component 1114 may further include a light sensor such as a CMOS or CCD image sensor, which is configured to use in imaging applications. In some embodiments, the sensor component 1114 may further include an acceleration transducer, a gyroscope sensor, a magnetic sensor, a pressure sensor or a temperature sensor.

The communication component 1116 may be configured for the convenience of wired or wireless communication between the UE 1100 and other devices. The UE 1100 may access wireless networks based on a communication standard, such as Wi-Fi, 2G or 3G, or their combination. In an example embodiment, the communication component 1116 receives broadcast signals or broadcast-related information from an external broadcast management system via a broadcast channel. In an exemplary embodiment, the communication component 1116 further includes a near field communication (NFC) module to facilitate short-range communication. For example, an NFC module may be implemented based on a radio frequency identification (RFID) technology, an infrared data association (IRDA) technology, an ultra-wideband (UWB) technology, Bluetooth (BT) technology and other technologies.

In an example embodiment, the UE 1100 may be implemented by at least one application specific integrated circuit (ASIC), digital signal processor (DSP), digital signal processing device (DSPD), programmable logic device (PLD), field programmable gate array (FPGA), controller, microcontroller, microprocessor or other electronics components, which is configured to perform the above method.

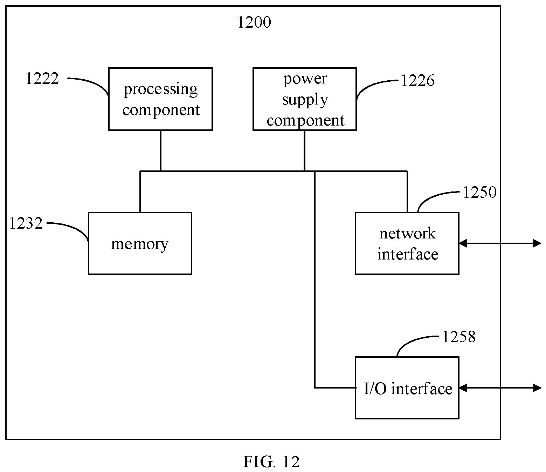

FIG. 12 is a block diagram illustrating a network side device 1200 according to embodiments of the present disclosure. For example, the network side device 1200 may be provided as a network side device. As illustrated in FIG. 12, a network side device 1200 includes a processing component 1222, which further includes at least one processor, and memory resources represented by the memory 1232, which are configured to store instructions executable by the processing component 1222, for example, an application. The application stored in the memory 1232 may include one or more modules each of which corresponds to a set of instructions. In addition, the processing component 1222 is configured to execute instructions, to perform the any method applicable to the network side device as described in the above method, for example, the method as illustrated in FIG. 1.

The network side device 1200 may further include one power supply component 1226 configured to execute power management of the network side device 1200, one wired or wireless network interface 1250 configured to connect the network side device 1200 to a network, and one input/output(I/O) interface 1258. The network side device 1200 may operate an operating system stored in the memory 1232, for example, Windows Server TM, Mac OS XTM, UnixTM, LinuxTM, Free BSDTM or similar.

In the above embodiments provided in the present disclosure, the method proposed in the present disclosure is introduced from perspectives of the network side device and the UE. In order to achieve functions of the method proposed in embodiments of the present disclosure, the network side device and the UE may include hardware structures and software modules, to achieve the above functions in form of hardware structures, software modules, or a combination of hardware structures and software modules. One of the above functions can be executed in the form of hardware structures, software modules, or the combination of hardware structures and software modules.

In the above embodiments provided in the present disclosure, the method proposed in the present disclosure is introduced from perspectives of the network side device and the UE. In order to achieve functions of the method proposed in embodiments of the present disclosure, the network side device and the UE may include hardware structures and software modules, to achieve the above functions in form of hardware structures, software modules, or a combination of hardware structures and software modules. One of the above functions can be executed in the form of hardware structures, software modules, or the combination of hardware structures and software modules.

An embodiment of the present disclosure provides a communication device. The communication device may include a transceiver module and a processing module. The transceiver module may include a sending module and/or a receiving module. The sending module is used to implement a sending function, and the receiving module is used to implement a receiving function. The transceiver module may implement the sending function and/or the receiving function.

The communication device may be a terminal device (such as the terminal device in the foregoing method embodiment), an apparatus in the terminal device, or an apparatus that can be used in conjunction with the terminal device. Alternatively, the communication device may be a network device, an apparatus in the network device, or an apparatus that can be used in conjunction with the network device.

An embodiment of the present disclosure provides another communication device. The communication device may be a network device, or may also be a terminal device (such as the terminal device in the foregoing method embodiment), or may also be a chip, a system on chip or a processor that supports the network device to implement the method, or a chip, a system on chip or a processor that supports the terminal device to implement the method. The device may be configured to implement the method described in the method embodiments, and may refer to descriptions in the method embodiments.

The communication device may include one or more processors. The processor may include a general purpose processor or a dedicated processor. For example, the processor may be a baseband processor or a central processor. The baseband processor may be configured to process a communication protocol and communication data, and the central processor may be configured to control a communication device (e.g., a base station, a baseband chip, a terminal device, a terminal device chip, a DU or CU, etc.), to execute a computer program, and process data of the computer program.

Optionally, the communication device may further include one or more memories storing a computer program. The processor executes the computer program so that the communication device performs the method as described in the above method embodiments. Optionally, the memory may further store data. The communication device and the memory may be independently configured or integrated together.

Optionally, the communication device may further include a transceiver and an antenna. The transceiver may be referred to as a transceiving unit, a transceiver or a transceiving circuit, which may be configured to achieve a transceving function. The transceiver may include a receiver and a sender. The receiver may be referred to as a receiver device or a receiving circuit, etc., for implementing a receiving function; the sender may be referred to as a sender device or a sending circuit, etc. for implementing a sending function.

Optionally, the communication device may further include one or more interface circuits. The interface circuit is configured to receive code instructions and transmit the code instructions to the processor. The processor runs the code instructions so that the communication device performs the method according to the above method embodiment.

The communication device is a terminal device (such as the terminal device in the foregoing method embodiment), in which case, the processor is configured to execute the method shown in any one of FIG. 1 to FIG. 5.

The communication device is a network device, in which case, the processor is configured to execute the method shown in any one of FIG. 7 to FIG. 8.

In an implementation, the processor may include a transceiver for implementing receiving and transmitting functions. For example, the transceiver may be a transceiving circuit, or an interface, or an interface circuit. The transceiving circuit, the interface or the interface circuit for implementing receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor may store a computer program. The computer program runs on the processor so that the communication device performs the method as described in the above method embodiments. The computer program may be solidified in the processor, in which case the processor may be implemented by a hardware.

In an implementation, the communication device may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor(BJT), bipolar CMOS(BiCMOS), silicon germanium(SiGe) and gallium arsenide(GaAs).

The communication device described in the above embodiments may be a network device or a terminal device (such as the terminal device in the foregoing method embodiment), but the scope of the communication device described in the present disclosure is not limited thereto, and a structure of the communication device may not be limited. The communication device may be a stand-alone device or may be a part of a larger device. For example, the communication device may be:
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal device, a smart terminal device, a cellular phone, a wireless device, a handset, a mobile unit, a vehicle device, a network device, a cloud device, an artificial intelligence device, etc.; and
(6) others, and so forth.

For a situation that the communication device may be a chip or a system on a chip, the chip includes a processor and an interface. The number of processors may be one or more, and the number of interfaces may be more than one.

Optionally, the chip also includes a memory for storing necessary computer programs and data.

Those skilled in the related art may understand that, various illustrative logical blocks and steps listed in embodiments of the present disclosure, may be implemented by an electronic hardware, a computer software or a combination of an electronic hardware and a computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the present disclosure.

A computer-readable storage medium storing instructions is further provided in the disclosure. When the instructions are executed, functions of the any one method embodiment are implemented.

A computer program product is further provided. The computer program product implements functions of the above any one method embodiment when executed by a processor.

In the above embodiments, the functions may be wholly or partially implemented by a software, a hardware, a firmware, or any combination thereof. When implemented by a software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that the first, second, and other numerical numbers involved in the disclosure are only for convenience of description and are not used to limit the scope of embodiments of the disclosure, nor to indicate an order.

At least one in the present disclosure may also be described as one or more, and a plurality of may be two, three, four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Other embodiments of the disclosure will be readily apparent to those skilled in the art from consideration of the specification and practice of the application disclosed herein. The present disclosure is intended to cover any variations, purposes, or adaptations of the application that follow the general principles of the application and include common knowledge or conventional technical means in the technical field that are not disclosed in the present disclosure. It is intended that the specification and embodiments be considered as examples only, with a true scope and spirit of the disclosure being indicated by the appended claims.

It is to be understood that the present disclosure is not limited to the precise structures described above and illustrated in the accompanying drawings, and various amendments and changes may be made without departing from the scope thereof. The scope of the disclosure is limited only by the appended claims.

## Claims

1. A method for sending a measurement report, performed by a terminal device, comprising:
receiving configuration information sent by a network side device;
determining a measurement report according to the configuration information, wherein the measurement report comprises a reference signal identifier of a reference signal, a layer 1 - reference signal received power (L1-RSRP) or layer 1 - signal to interference plus noise ratio (L1-SINR), and receiving beam information; and
sending the measurement report to the network side device.

2. The method of claim 1, further comprising:
acquiring the reference signal identifier according to the configuration information;
acquiring the L1-RSRP or the L1-SINR corresponding to the reference signal identifier, wherein each receiving beam corresponds to the reference signal identifier;
acquiring the receiving beam information of each receiving beam.

3. The method according to claim 2, wherein acquiring the receiving beam information of each receiving beam comprises at least one of:
acquiring a first absolute value of a first dimensional direction angle corresponding to each receiving beam;
acquiring a second absolute value of a second dimensional direction angle corresponding to each receiving beam, wherein the second dimensional direction angle is different from the first dimensional direction angle;
acquiring a first relative value of the first dimensional direction angle corresponding to each receiving beam;
acquiring a second relative value of the second dimensional direction angle corresponding to each receiving beam;
acquiring a first number of first dimensional direction angles corresponding to all receiving beams;
acquiring a second number of second dimensional direction angles corresponding to all receiving beams; or
acquiring a receiving beam identifier corresponding to each receiving beam.

4. The method according to claim 3, wherein acquiring the first relative value of the first dimensional direction angle corresponding to each receiving beam comprises:
taking a first dimensional direction angle corresponding to a first receiving beam as a reference direction angle of a first dimension; and
acquiring a difference between an absolute value of a first dimensional direction angle corresponding to a second receiving beam and the reference direction angle of the first dimension, wherein a first receiving beam identifier corresponding to the first receiving beam is different from a second receiving beam identifier corresponding to the second receiving beam;
determining the difference as a first relative value of the first dimensional direction angle corresponding to the first receiving beam.

5. The method according to claim 3, wherein acquiring the second relative value of the second dimensional direction angle corresponding to each receiving beam comprises:
taking a second dimensional direction angle corresponding to a first receiving beam as a reference direction angle of a second dimension; and
acquiring a difference between an absolute value of a second dimensional direction angle corresponding to a second receiving beam and the reference direction angle of the second dimension, wherein a first receiving beam identifier corresponding to the first receiving beam is different from a second receiving beam identifier corresponding to the second receiving beam;
determining the difference as a second relative value of the second dimensional direction angle corresponding to the first receiving beam.

6. The method according to any one of claims 1 to 5, wherein the reference signal comprises at least one of a synchronization signal block (SSB) or a channel state information-reference signal (CSI-RS).

7. A method for receiving a measurement report, performed by a network side device, comprising:
sending configuration information to a terminal device;
receiving a measurement report sent by the terminal device, wherein the measurement report comprises a reference signal identifier of a reference signal, a layer 1 - reference signal received power (L1-RSRP) or layer 1 - signal to interference plus noise ratio (L1-SINR), and receiving beam information.

8. The method according to claim 7, wherein the receiving beam information comprises at least one of:
a first absolute value of a first dimensional direction angle corresponding to each receiving beam of the terminal device;
a second absolute value of a second dimensional direction angle corresponding to each receiving beam, wherein the second dimensional direction angle is different from the first dimensional direction angle;
a first relative value of the first dimensional direction angle corresponding to each receiving beam;
a second relative value of the second dimensional direction angle corresponding to each receiving beam;
a first number of first dimensional direction angles corresponding to all receiving beams;
a second number of second dimensional direction angles corresponding to all receiving beams; or
a receiving beam identifier corresponding to each receiving beam.

9. The method according to any one of claims 7-8, wherein the reference signal comprises at least one of a synchronization signal block (SSB) or a channel state information-reference signal (CSI-RS).

10. An apparatus for sending a measurement report, comprising:
a receiving module, configured to receive configuration information sent by a network side device;
a processing module, configured to determine a measurement report based on the configuration information, wherein the measurement report comprises a reference signal identifier of a reference signal, a layer 1 - reference signal received power (L1-RSRP) or layer 1 - signal to interference plus noise ratio (L1-SINR), and receiving beam information;
a sending module, configured to send the measurement report to the network side device.

11. An apparatus for receiving a measurement report, comprising:
a sending module, configured to send configuration information to a terminal device;
a receiving module, configured to receive a measurement report sent by the terminal device, wherein the measurement report comprises a reference signal identifier of a reference signal, a layer 1 - reference signal received power (L1-RSRP) or layer 1 - signal to interference plus noise ratio (L1-SINR), and receiving beam information.

12. A terminal device, comprising a processor and a memory having a computer program stored thereon, wherein the processor executes the computer program stored in the memory, causing the device to execute the method according to any one of claims 1 to 6.

13. A network side device, comprising a processor and a memory having a computer program stored thereon, wherein the processor executes the computer program stored in the memory, causing the device to execute the method according to any one of claims 7 to 9.

14. A communication device, comprising a processor and an interface circuit, wherein
the interface circuit is configured to receive code instructions and transmit the code instructions to the processor;
the processor is configured to run the code instructions to perform the method according to any one of claims 1 to 6.

15. A communication device, comprising a processor and an interface circuit, wherein
the interface circuit is configured to receive code instructions and transmit the code instructions to the processor;
the processor is configured to run the code instructions to perform the method according to any one of claims 7 to 9.

16. A computer-readable storage medium for storing instructions, wherein when the instructions are executed, the method according to any one of claims 1 to 6 is implemented.

17. A computer-readable storage medium for storing instructions, wherein when the instructions are executed, the method according to any one of claims 7 to 9 is implemented.
